# EUROPÄISCHE PATENTSCHRIFT

(11) **EP 2 501 922 B1**
(45) Veröffentlichungstag und Bekanntmachung des Hinweises auf die Patenterteilung: **16.04.2014**
(21) Anmeldenummer: 10779779.7
(22) Anmeldetag: 15.11.2010
(51) Int. Cl.: F02M 35/10, F02M 25/06, G01F 1/684, G01F 15/18

(54) **SAUGROHRABSCHNITT UND SAUGANLAGE**
INTAKE PIPE SECTION AND INTAKE MODULE
TRONÇON DE CONDUIT D'ADMISSION ET MODULE D'ADMISSION

(30) Priorität: 17.11.2009 DE 102009053433
(43) Veröffentlichungstag der Anmeldung: 26.09.2012
(73) Patentinhaber: Mahle International GmbH, 70376 Stuttgart (DE)
(72) Erfinder: KAISER, Sven Alexander, 71336 Waiblingen (DE); COMBE, Gerald, 73249 Wernau (DE); KOHLER, Konrad, 72622 Nürtingen (DE); KREMER, Adolf, 71686 Remseck (DE); MATT, Martin, 76646 Bruchsal (DE); SCHNEIDER, Hans-Werner, 70437 Stuttgart (DE)
(74) Vertreter: BRP Renaud & Partner
(86) Internationale Anmeldenummer: PCT/EP2010/067484
(87) Internationale Veröffentlichungsnummer: WO 2011/061148

(56) Entgegenhaltungen:
- EP-A1- 0 664 390
- WO-A2-01/63220
- DE-A1-102005 057 574
- DE-C1- 19 827 330

## Beschreibung

Die vorliegende Erfindung betrifft einen Saugrohrabschnitt zum Einbau in eine Sauganlage einer Brennkraftmaschine, insbesondere eines Kraftfahrzeugs. Die Erfindung betrifft außerdem eine Sauganlage einer Brennkraftmaschine, insbesondere eines Kraftfahrzeugs, die mit einem derartigen Saugrohrabschnitt ausgestattet ist.

Eine Sauganlage zur Frischluftversorgung einer Brennkraftmaschine ist üblicherweise mit einem Luftmassenmesser ausgestattet, mit dessen Hilfe eine Motorsteuerung zusammenwirkt, um die Brennkraftmaschine wunschgemäß betreiben zu können. Beispielsweise hängen von der momentan zugeführten Luftmasse Parameter für die Kraftstoffeinspritzung, für eine Drosselklappe, für Ventilsteuerzeiten, für eine Abgasrückführung und dergleichen ab. Ein derartiger Luftmassenmesser, der insbesondere als Heißfilmmesser ausgestaltet sein kann, ist vergleichsweise empfindlich gegenüber Verunreinigungen. Dementsprechend ist der Luftmassenmesser in der Sauganlage üblicherweise stromab eines Luftfilters angeordnet. Des Weiteren ist es üblich, Blow-by-Gase, die von einem Kurbelgehäuse der Brennkraftmaschine in die Sauganlage rückgeführt werden, stromab des Luftmassenmessers einzuleiten.

Für die Rückführung der Blow-by-Gase ist es grundsätzlich möglich, einen vom Kurbelgehäuse oder von einer Zylinderkopfhaube ausgehenden Schlauch an die Sauganlage anzuschließen. Dies kann mit einem vergleichsweise hohen Aufwand einhergehen. Eine bekannte Ausführung ist in der DE 198 27 330 C1 offenbart.

Die vorliegende Erfindung beschäftigt sich mit dem Problem, für eine Sauganlage der eingangs genannten Art bzw. für einen zugehörigen Saugrohrabschnitt eine verbesserte oder zumindest eine andere Ausführungsform anzugeben, die sich insbesondere dadurch auszeichnet, dass sich eine vereinfachte Montage und/oder Herstellung und/oder Funktionssicherheit ergibt.

Dieses Problem wird erfindungsgemäß durch die Gegenstände der unabhängigen Ansprüche gelöst. Vorteilhafte Ausführungsformen sind Gegenstand der abhängigen Ansprüche.

Die Erfindung beruht auf dem allgemeinen Gedanken, einen Rohrkörper, der in die Sauganlage einbaubar ist, einerseits mit dem Luftmassenmesser und andererseits mit einem Bypasskanal auszustatten, wobei der Bypasskanal einerseits an einen Blow-by-Gas-Pfad anschließbar ist und andererseits einen im Rohrkörper verlaufenden Frischluftpfadabschnitt umgeht. Der Blow-by-Gas-Pfad führt Blow-by-Gas vom Kurbelgehäuse bzw. von einer Zylinderkopfhaube zur Sauganlage, wobei die Einleitung in die Sauganlage entsprechend dem erfindungsgemäßen Vorschlag nun über den Bypasskanal des Rohrkörpers erfolgt. Der Frischluftpfad ist durch den Rohrkörper geführt. In diesen Frischluftpfad ragt der Luftmassenmesser innerhalb des Rohrkörpers hinein.

Durch die Erfindung wird somit ein von der übrigen Sauganlage separat herstellbarer Saugrohrabschnitt bereitgestellt, der den Rohrkörper mit Luftmassenmesser und Bypasskanal umfasst. Durch diese Integralbauweise kann besonders einfach die Einleitung des Blow-by-Gases stromab des Luftmassenmessers sichergestellt werden. Von besonderem Vorteil ist jedoch der Umstand, dass die Anschlüsse, mit denen der Saugrohrabschnitt in die Sauganlage eingebunden wird, besonders einfach so gestaltet werden können, dass einerseits die Anbindung an den Frischluftpfad der Sauganlage und andererseits die Anbindung an den Blow-by-Gas-Pfad einfacher realisierbar sind, wobei insbesondere eine gleichzeitige Anschließbarkeit der verschiedenen Pfade realisierbar ist. Des Weiteren ist auch eine Integration der beiden einlassseitigen Anschlussstellen in eine gemeinsame Schnittstelle denkbar.

Besonders vorteilhaft ist dabei eine Ausführungsform, bei welcher der Bypasskanal integral am Rohrkörper ausgeformt ist. Denkbar ist insbesondere eine Herstellung des Rohrkörpers mit dem Bypasskanal aus Kunststoff, insbesondere als einstückiges Spritzformteil.

Für eine vereinfachte Montage des Saugrohrabschnitts an der Sauganlage ist der Rohrkörper mit seiner Einlassöffnung an einen Auslass einer anströmseitigen Komponente der Sauganlage anschließbar und mit seiner Auslassöffnung an einen Einlass einer abströmseitigen Komponente der Sauganlage anschließbar. Insbesondere können dadurch definierte Schnittstellen geschaffen werden, welche die Einbindung bzw. den Einbau des Saugrohrabschnitts in die Sauganlage vereinfachen.

Erfindungsgemäß ist nun vorgesehen sein, dass der Bypasskanal auslassseitig in die abströmseitige Komponente der Sauganlage einmündet. Mit anderen Worten, nach dem Einbau des Saugrohrabschnitts in die Sauganlage münden sowohl der Frischluftpfadabschnitt des Rohrkörpers als auch der Bypasskanal in die abströmseitige Komponente der Sauganlage ein. Insbesondere ergibt sich dadurch eine gemeinsame Anschlussstelle bzw. Schnittstelle, die den Saugrohrabschnitt mit der abströmseitigen Komponente der Sauganlage verbindet, wobei gleichzeitig der Frischluftpfad und der Bypasskanal in diese abströmseitige Komponente einmünden, wodurch in dieser abströmseitigen Komponente die Zumischung bzw. Einleitung des rückgeführten Blow-by-Gases zur Frischluftströmung erfolgt.

Gemäß einer anderen vorteilhaften Ausführungsform kann der Bypasskanal auslassseitig in der Frischluftströmungsrichtung über die Auslassöffnung des Rohrkörpers vorstehen. Hierdurch kann die Gefahr einer Rückströmung von Blow-by-Gas zum Luftmassenmesser reduziert werden.

Der erfindungsgemäß vorgeschlagene Saugrohrabschnitt ermöglicht es insbesondere, den Bypasskanal einlassseitig mit einem Anschlussstutzen auszustatten, der an einen Auslass des Blow-by-Gaspfads anschließbar ist, wobei für diesen Auslass grundsätzlich beliebige Konfigurationen denkbar sind. Beispielsweise kann besagter Auslass an einer anströmseitigen Komponente der Sauganlage angeordnet sein und insbesondere sogar daran integral ausgeformt sein. Der Anschlussstutzen des Bypasskanals kann beispielsweise auch zum Anschließen eines Schlauchs genutzt werden, über den das Blow-by-Gas rückgeführt wird. Hierzu können entsprechende Kupplungsmittel verwendet werden, die ein Montieren und Demontieren des Schlauchs ermöglichen. Alternativ ist es ebenso denkbar, an den Anschlussstutzen des Bypasskanals einen Schlauch fest anzubringen bzw. vorzumontieren, der dann beim Einbau des Saugrohrabschnitts an seinem Einlassende mit dem Kurbelgehäuse bzw. mit der Zylinderkopfhaube verbunden werden kann. Beispielsweise kann ein derartiger Schlauch an den Anschlussstutzen des Bypasskanals angeschweißt oder aufgeschossen werden.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Es zeigen, jeweils schematisch
- Fig. 1: eine perspektivische Ansicht eines Saugrohrabschnitts,
- Fig. 2: eine perspektivische Ansicht wie in Fig. 1, jedoch aus einer anderen Blickrichtung,
- Fig. 3: einen Längsschnitt einer Sauganlage im Bereich des Saugrohrabschnitts.

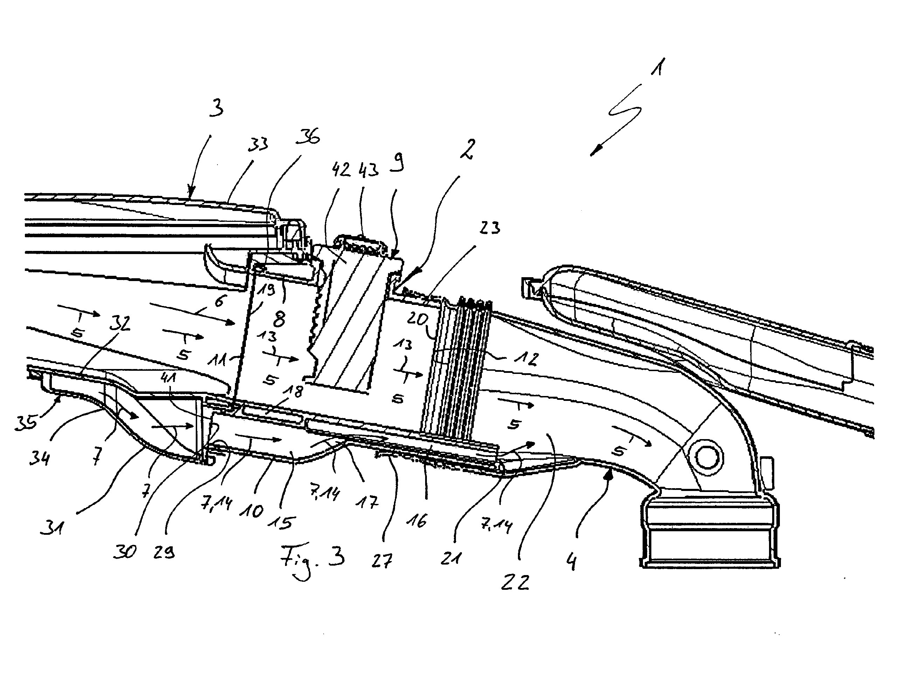

Entsprechend der Fig. 3 umfasst eine nur teilweise dargestellte Sauganlage 1, die zur Frischluftversorgung einer nicht dargestellten Brennkraftmaschine dient, die insbesondere in einem Kraftfahrzeug angeordnet sein kann, einen Saugrohrabschnitt 2 sowie zumindest eine anströmseitige Komponente 3 sowie zumindest eine abströmseitige Komponente 4. In Fig. 3 ist ein Frischluftpfad 5 durch Pfeile angedeutet. Ferner ist eine Strömungsrichtung 6 einer dem Frischluftpfad 5 folgenden Frischluftströmung durch einen Pfeil angedeutet. Dementsprechend ist die anströmseitige Komponente 3 bezüglich der Strömungsrichtung 6 stromauf des Saugrohrabschnitts 2 angeordnet, während die abströmseitige Komponente 4 bezüglich der Strömungsrichtung 6 stromab des Saugrohrabschnitts 2 angeordnet ist.

Im Bereich der anströmseitigen Komponente 3 verläuft im gezeigten Beispiel außerdem ein Blow-by-Gas-Pfad 7, der ebenfalls durch Pfeile angedeutet ist.

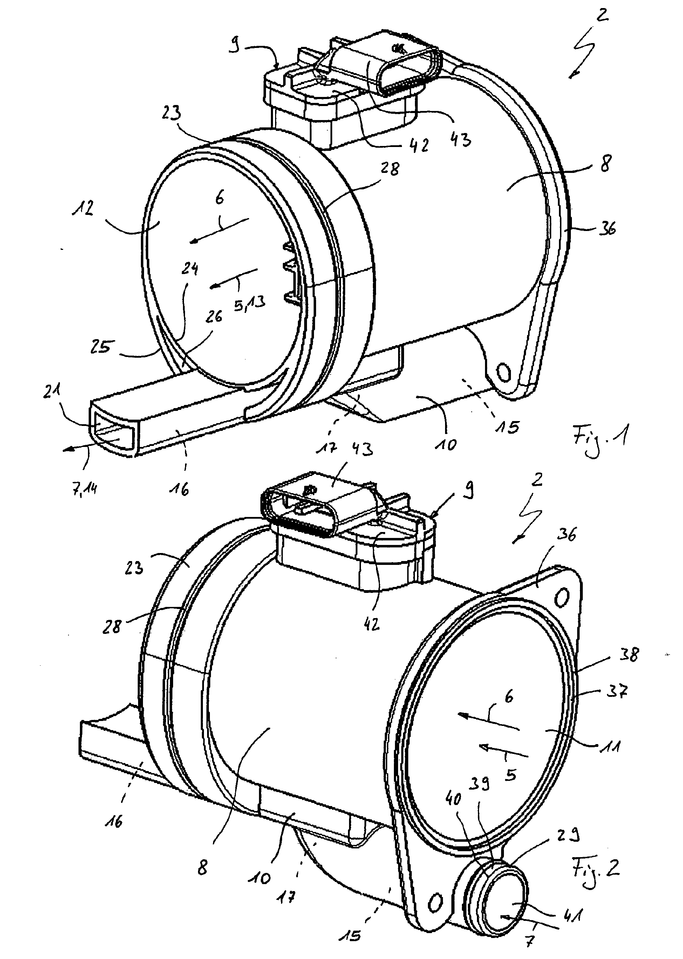

Entsprechend den Fig. 1 bis 3 umfasst der Saugrohrabschnitt 2 einen Rohrkörper 8, einen Luftmassenmesser 9 sowie einen Bypasskanal 10. Der Rohrkörper 8 besitzt eine Einlassöffnung 11 sowie eine Auslassöffnung 12 und umfasst einen Frischluftpfadabschnitt 13, der in Fig. 3 durch Pfeile angedeutet ist und von der Einlassöffnung 11 zur Auslassöffnung 12 führt. Im montierten Zustand der Fig. 3 gliedert sich der Frischluftpfadabschnitt 13 des Rohrkörpers 8 in den Frischluftpfad 5 der Sauganlage 1 ein.

Der Luftmassenmesser 9, bei dem es sich vorzugsweise um einen Heißfilmmesser handeln kann, ist am Rohrkörper 8 befestigt und ragt in den Frischluftpfadabschnitt 13 hinein.

Der Bypasskanal 10 ist am Rohrkörper 8 angeordnet und umgeht den Frischluftpfadabschnitt 13. Ferner ist der Bypasskanal 10 einlassseitig an den Blow-by-Gas-Pfad 7 anschließbar. Im montierten Zustand führt der Bypasskanal 10 einen Endabschnitt 14 des Blow-by-Gas-Pfads 7. Insoweit fallen der Blow-by-Gas-Pfad 7 und besagter Blow-by-Gas-Pfad-Endabschnitt 14 im Bypasskanal 10 zusammen.

Der Bypasskanal 10 ist außen am Rohrkörper 8 angeordnet, während innen im Rohrkörper 8 der Frischluftpfadabschnitt 13 verläuft bzw. geführt ist. Besonders vorteilhaft ist die hier gezeigte Ausführungsform, bei welcher der Bypasskanal 10 integral am Rohrkörper 8 ausgeformt ist. Vorzugsweise sind der Rohrkörper 8 und der Bypasskanal 10 aus Kunststoff hergestellt und als Spritzformteil konzipiert. Im Beispiel der hier gezeigten Figuren 1-3 besitzt der Bypasskanal 10 einen Einlassabschnitt 15, der beispielsweise einen kreisförmigen Querschnitt aufweist, sowie einen Auslassabschnitt 16, der einen vom Einlassabschnitt 15 abweichenden Querschnitt besitzen kann. Im Beispiel ist der Strömungsquerschnitt des Auslassabschnitts 16 im Wesentlichen rechteckförmig, wobei diese "Rechteckform" leicht gekrümmt ist, was den Fig. 1 und 2 entnehmbar ist. Ein Übergangsabschnitt 17 verbindet den Einlassabschnitt 15 mit dem Auslassabschnitt 16 und führt den Einlassquerschnitt, insbesondere stufenlos, in den Auslassquerschnitt über. Bei dem dargestellten Ausführungsbeispiel ist der Auslassabschnitt 16 integral mit dem Saugrohrabschnitt 2 ausgeführt. Gemäß einer anderen Ausführung kann der Auslassabschnitt 16 auch als ein gesondertes Bauteil ausgeführt sein und auf den Einlassabschnitt 15 aufgesteckt, aufgeschweißt oder aufgeschraubt sein. Weiterhin kann das gesonderte Bauteil aus einem flexiblen Bauteil, insbesondere einem biegbaren Schlauch gebildet sein. Somit kann der Auslassabschnitt 16 länger und/oder gebogen ausgeführt werden. Im Bereich des Einlassabschnitts 15 kann zwischen dem Bypasskanal 10 und dem Rohrkörper 8 eine Lücke 18 vorgesehen sein.

Entsprechend Fig. 3 ist der Rohrkörper 8 mit seiner Einlassöffnung 11 an einen Auslass 19 der anströmseitigen Komponente 3 angeschlossen, während er mit seiner Auslassöffnung 12 an einen Einlass 20 der abströmseitigen Komponente 4 angeschlossen ist. Zweckmäßig kann nun vorgesehen sein, dass der Bypasskanal 10 gemäß Fig. 3 auslassseitig, also hier mit seinem Auslassabschnitt 16 in die abströmseitige Komponente 4 einmündet. Mit anderen Worten, eine Austrittsöffnung 21 des Bypasskanals 10 mündet in die abströmseitige Komponente 4 ein. Dementsprechend kann dort rückgeführtes Blow-by-Gas in die Frischluftströmung der Sauganlage 1 eintreten. In der Folge kommt es in einem Bereich 22 zu einer Zumischung von Blow-by-Gas zur Frischluft. Erkennbar befindet sich diese Zumischstelle 22 stromab des Luftmassenmessers 9, wodurch eine Verunreinigung des Luftmassenmessers 9 durch rückgeführtes Blow-by-Gas vermieden werden kann. Besonders zweckmäßig ist dabei die hier gezeigte Ausführung, bei welcher der Bypasskanal 10 auslassseitig in der Strömungsrichtung 6 der Frischluftströmung über die Auslassöffnung 12 des Rohrkörpers 8 vorsteht. Im Beispiel ragt der Auslassabschnitt 16 signifikant über das auslassseitige Ende des Rohrkörpers 8 vor. Beispielsweise steht der Bypasskanal 10 um mindestens 30%, hier etwa um 50%, der axialen Länge des Rohrkörpers 8 abströmseitig über den Rohrkörper 8 vor. Diese Maßnahme reduziert deutlich die Gefahr einer Rückströmung von Blow-by-Gas zum Luftmassenmesser 9.

Der Rohrkörper 8 ist zweckmäßig mit einem auslassseitigen Auslassanschluss 23 ausgestattet, über den er mit der abströmseitigen Komponente 4 verbunden werden kann. Dieser Auslassanschluss 23 umschließt bzw. umfasst dabei die Auslassöffnung 12 des Rohrkörpers 8 und den Auslassabschnitt 16 des Bypasskanals 10. Wie insbesondere Fig. 1 entnehmbar ist, kann der Auslassanschluss 23 hierzu eine die Auslassöffnung 12 seitlich begrenzende Innenhaut 24 aufweisen, die einen runden Innenquerschnitt besitzt. Ferner weist der Auslassanschluss 23 eine die Innenhaut 24 und den Bypasskanal 10 bzw. den Auslassabschnitt 16 des Bypasskanals 10 umschließende Außenhaut 25 auf, die einen runden Außenquerschnitt besitzt. Dabei ist der Außenquerschnitt größer als der Innenquerschnitt, derart, dass der Bypasskanal 10 zwischen der Innenhaut 24 und der Außenhaut 25 angeordnet werden kann. Innenhaut 24 und Außenhaut 25 sind bezüglich ihrer Querschnitte exzentrisch angeordnet, derart, dass sie im Bereich des Bypasskanals 10 maximal voneinander beabstandet sind, während sie dazu diametral gegenüberliegend ihren kleinsten Abstand voneinander besitzen. Hierdurch entsteht im Bereich des Bypasskanals 10 eine Lücke 26 zwischen der Innenhaut 24 und der Außenhaut 25, in die der Bypasskanal 10 eingesetzt bzw. eingepasst ist. Durch diese Bauweise ist es besonders einfach, den Auslassanschluss 23 des Rohrkörpers 8 mit der abströmseitigen Komponente 4 zu verbinden. Beispielsweise kann hierzu ein hülsenförmiger Abschnitt 27 der abströmseitigen Komponente 4 außen auf den Auslassanschluss 23 aufgeschoben werden, also außen auf die Außenhaut 25 aufgeschoben werden. Diese Verbindung kann beispielsweise mittels einer Schelle fixiert werden. Im Beispiel der Figuren 1 und 2 ist der Auslassanschluss 23 außen, also an der Außenhaut 25 mit einer ringförmig umlaufenden Außennut 28 ausgestattet, in welche eine Dichtung einsetzbar ist. Der Innenquerschnitt ist bevorzugt kreisförmig, während der Außenquerschnitt bevorzugt elliptisch oder oval ist, oder vice versa.

Der Bypasskanal 10 kann einlassseitig, also an seinem Einlassabschnitt 15 mit einem Anschlussstutzen 29 ausgestattet sein. Mit diesem Anschlussstutzen 29 ist der Bypasskanal 10 an einen Auslass 30 einer Blow-by-Gas-Leitung 31 anschließbar. Diese Blow-by-Gas-Leitung 31 führt den Blow-by-Gas-Pfad 7 bis zum Bypasskanal 10. Dieser Auslass 30 bzw. ein den Auslass 30 aufweisender Abschnitt der Blow-by-Gas-Leitung 31 kann gemäß der in Fig. 3 gezeigten Ausführungsform an der anströmseitigen Komponente 3 angeordnet sein. Dabei kann dieser Auslass 30 bzw. der den Auslass 30 aufweisende Abschnitt der Blow-by-Gas-Leitung 31 insbesondere an der anströmseitigen Komponente 3 integral ausgeformt sein.

Im Beispiel der Fig. 3 ist die Blow-by-Gas-Leitung 31 durch einen Kanal gebildet, der an einer dem Frischluftpfad 5 zugewandten Seite durch einen Wandabschnitt 32 eines Luftfiltergehäuses 33 begrenzt ist und der an einer vom Frischluftpfad 5 abgewandten Seite durch einen Wandabschnitt 34 einer Zylinderkopfhaube 35 begrenzt ist. Das Luftfiltergehäuse 33 und die Zylinderkopfhaube 35 bilden in diesem Fall gemeinsam die anströmseitige Komponente 3, an welche der Saugrohrabschnitt 2 angeschlossen ist. Durch diese integrale Bauweise ist es besonders einfach möglich, eine gemeinsame Schnittstelle für den Frischluftpfad 5 einerseits und den Blow-by-Gas-Pfad 7 andererseits bereitzustellen. Beispielsweise kann im gezeigten Beispiel der Saugrohrabschnitt 2 einfach axial mit seinem Einlassende an die anströmseitige Komponente 3 angesetzt werden, wobei der Anschlussstutzen 29 in die als Kanal ausgestaltete Blow-by-Gas-Leitung 31 eindringt, während ein Einlassflansch 36 des Rohrkörpers 8 stirnseitig mit der anströmseitigen Komponente 3 bzw. mit dem Luftfiltergehäuse 33 verbunden wird. Dieser Einlassflansch 36 umschließt die Einlassöffnung 19 und kann beispielsweise mit einer Axialdichtung 37 ausgestattet sein, die in eine die Einlassöffnung 11 ringförmig umschließende Axialnut 38 eingesetzt ist. Auf diese Weise wird am Einlassflansch 36 eine Axialdichtung realisiert. Im Unterschied dazu kann am Anschlussstutzen 29 eine Radialdichtung verwirklicht werden, indem eine Ringdichtung 39 in eine außen ringförmig umlaufende Nut 40 eingesetzt wird, die außen am Anschlussstutzen 29 angebracht ist.

Abweichend von der hier gezeigten speziellen Ausführungsform sind für den Anschluss des Bypasskanals 10 an den Blow-by-Gas-Pfad 7 auch andere Ausführungsformen denkbar. Beispielsweise kann auf den Anschlussstutzen 29 ein Schlauch aufgeschossen werden, der dann einen Teil der Blow-by-Gas-Leitung 31 bildet. Ebenso ist es möglich, in den Blow-by-Gas-Pfad 7 einen Ölabscheider (nicht dargestellt) einzubinden, dessen Blow-by-Gas-Auslass dann den Auslass 30 bildet, an welchen der Bypasskanal 10 anschließbar ist. Ein derartiger Ölabscheider kann beispielsweise in die anströmseitige Komponente 3 und insbesondere in das Luftfiltergehäuse 33 integriert sein.

Beim hier gezeigten Beispiel besitzen die Einlassöffnung 11 des Rohrkörpers 8 und eine Eintrittsöffnung 41 des Bypasskanals 10 die gleiche Orientierung, das heißt, die Ebenen, in welchen die Einlassöffnung 11 einerseits und die Eintrittsöffnung 41 andererseits liegen, erstrecken sich parallel zueinander. Auch erstrecken sich die Strömungsrichtungen von Frischluft einerseits und Blow-by-Gas andererseits in diesen Öffnungen 11, 41 im Wesentlichen parallel zueinander. Dennoch sind die Einlassöffnung 11 und die Eintrittsöffnung 41 baulich voneinander getrennt bzw. voneinander beabstandet am Rohrkörper 8 ausgebildet.

Hierdurch wird ein getrenntes Anschließen des Rohrkörpers 8 bzw. des Saugrohrabschnitts 2 einerseits an den Frischluftpfad 5 und andererseits an den Blow-by-Gas-Pfad 7 vereinfacht.

Der Luftmassenmesser 9 besitzt entsprechend einer bevorzugten Ausführungsform ein Gehäuse 42, das mit dem Rohrkörper 9 verklebt oder verschweißt sein kann. Hierdurch kann eine ausreichende Abdichtung zwischen dem Gehäuse 42 und dem Rohrkörper 8 gewährleistet werden. Besonders vorteilhaft ist eine Ausführungsform, bei welcher das Gehäuse 42 und der Rohrkörper 8 jeweils aus Kunststoff hergestellt sind, wodurch es besonders einfach möglich ist, das Gehäuse 42 mit dem Rohrkörper 8 zu verschweißen.

Der Luftmassenmesser 9 besitzt außerdem einen Anschluss 43, über den der Luftmassenmesser 9 mit einer Steuerung oder dergleichen verbunden werden kann.

Zweckmäßig ist eine Ausführungsform, bei welcher der Saugrohrabschnitt 2 eine vormontierte Einheit bildet, die separat von der übrigen Sauganlage 1 herstellbar ist und besonders einfach in diese eingebaut werden kann. Besonders zweckmäßig ist dabei die Möglichkeit, den Luftmassenmesser 9 zu kalibrieren, wenn er bereits in den Rohrabschnitt 8 eingebaut ist, während der Saugrohrabschnitt 2 selbst noch nicht in die Sauganlage 1 eingebaut ist. Auf diese Weise kann der Saugrohrabschnitt 2 mit kalibriertem Luftmassenmesser 9 in die Sauganlage 1 eingebaut werden. Dies führt zu einer erheblichen Vereinfachung bei der Montage der Sauganlage 1.

## Patentansprüche

1. Saugrohrabschnitt zum Einbau in eine Sauganlage (1) einer Brennkraftmaschine, insbesondere eines Kraftfahrzeugs
- mit einem Rohrkörper (8), der eine Einlassöffnung (11) sowie eine Auslassöffnung (12) aufweist und der einen von der Einlassöffnung (11) zur Auslassöffnung (12) führenden Frischluftpfadabschnitt (13) aufweist,
- mit einem Luftmassenmesser (9), der am Rohrkörper (8) befestigt ist und in den Frischluftpfadabschnitt (13) hineinragt,
- mit einem am Rohrkörper (8) angeordneten Bypasskanal (10), der den Frischluftpfadabschnitt (13) umgeht und der einlassseitig an einen Blow-by-Gas-Pfad (7) anschließbar ist,
- wobei der Rohrkörper (8) mit seiner Einlassöffnung (11) an einen Auslass (19) einer anströmseitigen Komponente (3) der Sauganlage (1) anschließbar ist,
- wobei der Rohrkörper (8) mit seiner Auslassöffnung (12) an einen Einlass (20) einer abströmseitigen Komponente (4) der Sauganlage (1) anschließbar ist,
**dadurch gekennzeichnet,**
**dass** der Rohrkörper (8) eine gemeinsame Anschlussstelle zum Anschließen des Frischluftpfadabschnitts (13) und des Bypasskanals (10) an die abströmseitige Komponente (4) aufweist, so dass bei an die abströmseitige Komponente (4) angeschlossenem Rohrkörper (8) sowohl der Frischluftpfadabschnitt (13) als auch der Bypasskanal (10) in die abströmseitige Komponente (4) einmünden.

2. Saugrohrabschnitt nach Anspruch 1,
**dadurch gekennzeichnet,**
**dass** der Bypasskanal (10) integral am Rohrkörper (8) ausgeformt ist.

3. Saugrohrabschnitt nach Anspruch 1 oder 2,
**dadurch gekennzeichnet,**
- **dass** der Rohrkörper (8) einen auslassseitigen Auslassanschluss (23) aufweist, der mit einer abströmseitigen Komponente (4) der Sauganlage (1) verbindbar ist,
- **dass** der Auslassanschluss (23) die Auslassöffnung (12) und einen Auslassabschnitt (16) des Bypasskanals (10) aufweist.

4. Saugrohrabschnitt nach Anspruch 3,
**dadurch gekennzeichnet,**
**dass** der Auslassanschluss (23) eine die Auslassöffnung (12) seitlich begrenzende Innenhaut (24) mit rundem Innenquerschnitt und eine die Innenhaut (24) und den Bypasskanal (10) umschließende Außenhaut (25) mit rundem Außenquerschnitt aufweist.

5. Saugrohrabschnitt nach einem der Ansprüche 1 bis 4,
**dadurch gekennzeichnet,**
**dass** der Bypasskanal (10) auslassseitig in der Frischluftströmungsrichtung (6) über die Auslassöffnung (12) vorsteht.

6. Saugrohrabschnitt nach einem der Ansprüche 1 bis 5,
**dadurch gekennzeichnet,**
**dass** der Bypasskanal (10) einlassseitig einen Anschlussstutzen (29) aufweist, der an einen Auslass (30) einer den Blow-by-Gas-Pfad (7) führenden Blow-by-Gas-Leitung (31) anschließbar ist.

7. Saugrohrabschnitt nach Anspruch 6,
**dadurch gekennzeichnet,**
- **dass** der Auslass (30) der Blow-by-Gas-Leitung (31) an einer anströmseitigen Komponente (3) der Sauganlage (1) angeordnet ist,
- wobei insbesondere vorgesehen sein kann, dass der Auslass (30) der Blow-by-Gas-Leitung (31) integral an der anströmseitigen Komponente (3) ausgeformt ist.

8. Saugrohrabschnitt nach einem der Ansprüche 1 bis 7,
**dadurch gekennzeichnet,**
- **dass** der Luftmassenmesser (9) ein Gehäuse (42) besitzt und mit dem Rohrkörper (8) verklebt oder verschweißt ist,
- wobei insbesondere vorgesehen sein kann, dass der Rohrkörper (8) und das Gehäuse (42) aus Kunststoff hergestellt sind.

9. Saugrohrabschnitt nach einem der Ansprüche 1 bis 8,
**dadurch gekennzeichnet,**
**dass** der Saugrohrabschnitt (2) eine vormontierte Einheit ist, die mit kalibriertem Luftmassenmesser (9) in die Sauganlage (1) einbaubar ist.

10. Sauganlage zur Frischluftversorgung einer Brennkraftmaschine, insbesondere eines Kraftfahrzeugs, mit mindestens einem Saugrohrabschnitt (2) nach einem der Ansprüche 1 bis 9.

## Claims

1. An intake manifold section for installing in an intake system (1) of an internal combustion engine, in particular of a motor vehicle,
- with a tube body (8) comprising an inlet opening (11) and an outlet opening (12) and comprising a fresh air path section (13) running from the inlet opening (11) to the outlet opening (12),
- with an air mass sensor (9) fastened to the tube body (8) and protruding into the fresh air path section (13),
- with a bypass channel (10) disposed on the tube body (8) and bypassing the fresh air path section (13) and that can be connected to a blow-by gas path (7) at the inlet side,
- the tube body (8) is able to be connected by its inlet opening (11) to an outlet (19) of a component (3) of the intake system (1) on the inflow side,
- the tube body (8) is able to be connected by its outlet opening (12) to an inlet (20) of a component (4) of the intake system (1) on the outflow side,
**characterized in that**
the tube body (8) comprises a shared connection site for connecting the fresh air path section (13) and the bypass channel (10) with the component (4) on the outflow side such that, when the tube body (8) is connected with the component (4) on the outflow side, the fresh air path section (13) as well as the bypass channel (10) open into the component (4) on the outflow side.

2. The intake manifold section according to Claim 1,
**characterized in that**
the bypass channel (10) is formed integrally on the tube body (8).

3. The intake manifold section according to Claim 1 or 2,
**characterized in that**
- the tube body (8) has an outlet connection (23) on the outlet side, which is able to be connected to a component (4) of the intake system (1) on the outflow side,
- the outlet connection (23) has the outlet opening (12) and an outlet section (16) of the bypass channel (10).

4. The intake manifold section according to Claim 3,
**characterized in that**
the outlet connection (23) has an inner skin (24) with a round internal cross-section laterally delimiting the outlet opening (12), and an outer skin (25) with a round external cross-section surrounding the inner skin (24) and the bypass channel (10).

5. The intake manifold section according to one of Claims 1 to 4,
**characterized in that**
the bypass channel (10) projects over the outlet opening (12) on the outlet side in the fresh air flow direction (6).

6. The intake manifold section according to one of Claims 1 to 5,
**characterized in that**
the bypass channel (10) has a connection piece (29) on the inlet side, which is able to be connected to an outlet (30) of a blow-by gas line (31) guiding the blow-by gas path (7).

7. The intake manifold section according to Claim 6,
**characterized in that**
- the outlet (30) of the blow-by gas line (31) is arranged on a component (3) of the intake system (1) on the inflow side,
- wherein in particular provision can be made that the outlet (30) of the blow-by gas line (31) is formed integrally on the component (3) on the inflow side.

8. The intake manifold section according to one of Claims 1 to 7,
**characterized in that**
- the air mass sensor (9) has a housing (42) and is glued or welded to the tube body (8),
- wherein in particular provision can be made that the tube body (8) and the housing (42) are produced from plastic.

9. The intake manifold section according to one of Claims 1 to 8,
**characterized in that**
the intake manifold section (2) is a pre-mounted unit, which is able to be installed with a calibrated air mass sensor (9) into the intake system (1).

10. An intake system for the fresh air supply of an internal combustion engine, in particular of a motor vehicle, with at least one intake manifold section (2) according to one of Claims 1 to 9.

## Revendications

1. Tronçon de tuyau d'admission destiné à être monté dans une installation d'admission (1) d'un moteur à combustion interne, en particulier d'un véhicule automobile, comprenant
- un corps tubulaire (8) qui présente une ouverture d'admission (11) ainsi qu'une ouverture d'échappement (12) et qui présente un tronçon de chemin d'air frais (13) allant de ladite ouverture d'admission (11) à ladite ouverture d'échappement (12),
- un mesureur de masse d'air (9) qui est fixé sur ledit corps tubulaire (8) et se projette dans le tronçon de chemin d'air frais (13),
- un canal de dérivation (10) qui est disposé sur ledit corps tubulaire (8) et qui contourne le tronçon de chemin d'air frais (13) et peut être raccordé côté entrée à un chemin de gaz de blow-by (7),
- ledit corps tubulaire (8) pouvant être raccordé par son ouverture d'admission (11) à une sortie (19) d'un composant côté amenée (3) de ladite installation d'admission (1),
- ledit corps tubulaire (8) pouvant être raccordé par son ouverture d'échappement (12) à une entrée (20) d'un composant côté échappement (4) de ladite installation d'admission (1),
**caractérisé par le fait**
**que** ledit corps tubulaire (8) présente un point de raccordement commun pour raccorder ledit tronçon de chemin d'air frais (13) et ledit canal de dérivation (10) au composant côté échappement (4) de sorte que, lorsque le corps tubulaire (8) est raccordé audit composant côté échappement (4), aussi bien ledit tronçon de chemin d'air frais (13) que ledit canal de dérivation (10) débouchent dans le composant côté échappement (4).

2. Tronçon de tuyau d'admission selon la revendication 1, **caractérisé par le fait**
**que** ledit canal de dérivation (10) est formé intégralement sur ledit corps tubulaire (8).

3. Tronçon de tuyau d'admission selon la revendication 1 ou 2, **caractérisé par le fait**
- **que** ledit corps tubulaire (8) présente un raccord d'échappement (23) côté échappement qui peut être relié à un composant côté échappement (4) de ladite installation d'admission (1),
- **que** le raccord d'échappement (23) présente ladite ouverture d'échappement (12) et un tronçon d'échappement (16) du canal de dérivation (10).

4. Tronçon de tuyau d'admission selon la revendication 3, **caractérisé par le fait**
**que** le raccord d'échappement (23) présente une peau intérieure (24) à section transversale intérieure ronde qui limite latéralement ladite ouverture d'échappement (12) ainsi qu'une peau extérieure (25) à section transversale extérieure ronde qui enveloppe ladite peau intérieure (24) et le canal de dérivation (10).

5. Tronçon de tuyau d'admission selon l'une quelconque des revendications 1 à 4, **caractérisé par le fait**
**que** le canal de dérivation (10) fait saillie côté échappement, dans la direction d'écoulement d'air frais (6), au-delà de ladite ouverture d'échappement (12).

6. Tronçon de tuyau d'admission selon l'une quelconque des revendications 1 à 5, **caractérisé par le fait**
**que**, côté admission, ledit canal de dérivation (10) présente une tubulure de raccordement (29) qui peut être raccordée à une sortie (30) d'une conduite de gaz de blow-by (31) menant le chemin de gaz de blow-by (7).

7. Tronçon de tuyau d'admission selon la revendication 6, **caractérisé par le fait**
- **que** la sortie (30) de la conduite de gaz de blow-by (31) est agencée sur un composant côté amenée (3) de ladite installation d'admission (1),
- dans lequel on peut prévoir en particulier que ladite sortie (30) de la conduite de gaz de blow-by (31) est formée intégralement sur ledit composant côté amenée (3).

8. Tronçon de tuyau d'admission selon l'une quelconque des revendications 1 à 7, **caractérisé par le fait**
- **que** le mesureur de masse d'air (9) comprend un carter (42) et est relié par collage ou soudage au corps tubulaire (8),
- dans lequel on peut prévoir en particulier que le corps tubulaire (8) et le carter (42) sont réalisés en matière synthétique.

9. Tronçon de tuyau d'admission selon l'une quelconque des revendications 1 à 8, **caractérisé par le fait**
**que** ledit tronçon de tuyau d'admission (2) est une unité pré-montée qui peut être montée, avec le mesureur de masse d'air (9) calibré, dans ladite installation d'admission (1).

10. Installation d'admission pour l'alimentation en air frais d'un moteur à combustion interne, en particulier d'un véhicule automobile, comprenant au moins un tronçon de tuyau d'admission (2) selon l'une quelconque des revendications 1 à 9.
